(19) Europäisches Patentamt
European Patent Office
Office européen des brevets

(11) Publication number: **0 562 533 A1**

# (12) EUROPEAN PATENT APPLICATION

(21) Application number: **93104709.6**

(51) Int. Cl.$^5$: **G03C 1/795**

(22) Date of filing: **22.03.93**

(30) Priority: **24.03.92 JP 65854/92**

(43) Date of publication of application:
**29.09.93 Bulletin 93/39**

(84) Designated Contracting States:
**BE DE FR GB IT NL**

(71) Applicant: **KONICA CORPORATION**
**26-2, Nishi-shinjuku 1-chome Shinjuku-ku**
**Tokyo(JP)**

(72) Inventor: **Ueda, Eiichi**
**c/o Konica Corporation, 1, Sakuramachi**
**Hino-shi, Tokyo(JP)**
Inventor: **Yajima, Takatoshi**
**c/o Konica Corporation, 1, Sakuramachi**
**Hino-shi, Tokyo(JP)**
Inventor: **Araki, Hiromitsu**
**c/o Konica Corporation, 1, Sakuramachi**
**Hino-shi, Tokyo(JP)**
Inventor: **Kobayashi, Hideyuki**
**c/o Konica Corporation, 1, Sakuramachi**
**Hino-shi, Tokyo(JP)**
Inventor: **Nakanishi, Kenji**
**c/o Konica Corporation, 1, Sakuramachi**
**Hino-shi, Tokyo(JP)**
Inventor: **Naito, Hiroshi**
**c/o Kanebo, Ltd., 4-1, Kanebo-cho**
**Hohfu-shi, Yamaguchi-ken(JP)**
Inventor: **Okubo, Yoshioki**
**c/o Kanebo, Ltd., 4-1, Kanebo-cho**
**Hohfu-shi, Yamaguchi-ken(JP)**

(74) Representative: **Henkel, Feiler, Hänzel & Partner**
**Möhlstrasse 37**
**D-81675 München (DE)**

## (54) Support for photographic material and light-sensitive silver halide photographic material using the same.

(57) Disclosed is a support for a photographic material comprising a copolymerized polyester mainly composed of polyethylene terephthalate, wherein the copolymerized polyester contains at least a copolymer component having a metal sulfonate group in an amount of 2 to 7 mole % based on all ester bond units and an antioxidant in an amount of 0.01 to 2.0 % by weight based on the copolymerized polyester; and a light-sensitive silver halide photographic material having the support as described above and at least one silver halide emulsion layer provided on at least one side of the support.

EP 0 562 533 A1

## BACKGROUND OF THE INVENTION

This invention relates to a support for a photographic material and a light-sensitive silver halide photographic material using the same, more specifically to a support for a photographic material in which roll set curl can be easily straightened and no bad influence is exerted on photographic characteristics and a light-sensitive silver halide photographic material using the same.

A polyethylene terephthalate (PET) film has excellent mechanical characteristics so that it has been widely used as a support of a film for X-ray photography or a light-sensitive material for graphic arts. On the other hand, a triacetyl cellulose (TAC) support has been used as a support for a roll film wound around a core having a small diameter such as a color negative film. This TAC support has a characteristic that roll set curl formed during storage in a rolled state can be straightened by development processing. However, such roll set curl of the PET film can hardly be straightened so that the PET film cannot be used as a support for a light-sensitive material in place of the TAC film used for a conventional light-sensitive material.

In Japanese Provisional Patent Publication No. 244446/1989, there has been described a polyester support in which a polyester mainly composed of polyethylene terephthalate is copolymerized with an aromatic dicarboxylic acid having a metal sulfonate group and an aliphatic dicarboxylic acid as acid components, and it has been suggested that roll set curl of said polyester can be easily straightened. However, when this polyester is used as a support for a photographic material, photographic characteristics, particularly storability at high temperature are lowered, whereby it cannot stand practical use.

In Japanese Patent Publication No. 28336/1982, it has been described that a copolyester in which a polyester mainly composed of polyethylene terephthalate is copolymerized with an aromatic dicarboxylic acid having a metal sulfonate group and polyethylene glycol is used as an element for a photographic material. Roll set curl of this copolyester can be easily straightened, but the copolyester exerts a great influence on photographic characteristics, particularly storability at high temperature, whereby it has problems in practical use.

As described above, a copolyester in which polyethylene terephthalate is copolymerized with an aromatic dicarboxylic acid having a metal sulfonate group lowers photographic characteristics and has problems in practical use when it is used as a support for a photographic material.

## SUMMARY OF THE INVENTION

In order to cope with the problems as described above, an object of the present invention is to provide a support for a photographic material in which property of resolving roll set curl is excellent and no bad influence is exerted on photographic characteristics and a light-sensitive silver halide photographic material using the same.

The above object of the present invention can be accomplished by a support for a photographic material comprising a copolymerized polyester mainly composed of polyethylene terephthalate, wherein said copolymerized polyester contains at least a copolymer component having a metal sulfonate group in an amount of 2 to 7 mole % based on all ester bond units and an antioxidant in an amount of 0.01 to 2.0 % by weight based on said copolymerized polyester.

The present invention can provide a light-sensitive silver halide photographic material having a support and at least one silver halide emulsion layer on at least one side of the support, wherein said support is a support as defined above.

The preferred embodiments of the present invention are that in the above support for a photographic material, the copolymerized polyester mainly composed of polyethylene terephthalate contains 3 to 10 % by weight of polyalkylene glycol having a number average molecular weight of 600 to 20,000 based on the total weight of said copolymerized polyester, and the antioxidant is a hindered phenol series compound or a mixture of a hindered phenol series compound and an arylamine series compound.

## DESCRIPTION OF THE PREFERRED EMBODIMENTS

In the following, the present invention is explained in detail.

As the copolymer component in the present invention, there may be mentioned an aromatic dicarboxylic acid having a metal sulfonate group.

As the aromatic dicarboxylic acid having a metal sulfonate group, there may be used 5-sodium sulfoisophthalic acid, 2-sodium sulfoisophthalic acid, 4-sodium sulfoterephthalic acid, 4-sodium sulfo-2,6-naphthalenedicarboxylic acid, ester-forming derivatives shown below:

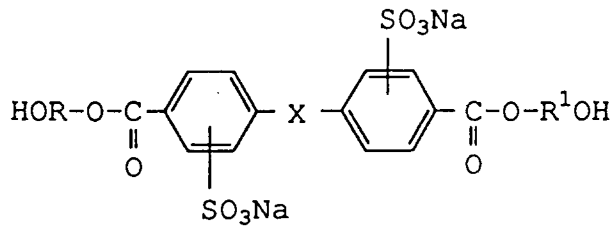

wherein X represents

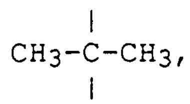

$-CH_2-$, $-SO_2-$ or -O-;

and R and $R^1$ each represent $-(CH_2)_n-$ where n represents an integer of 1 to 20,

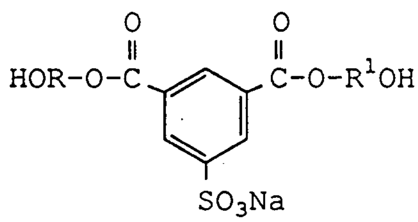

wherein R and $R^1$ each represent $-(CH_2)_n-$ where n represents an integer of 1 to 20, and a compound in which each of these sodiums is substituted by another metal (e.g. potassium and lithium).

In the present invention, the copolymer component having a metal sulfonate group is contained in the copolymerized polyester generally in an amount of 2 to 7 mole % based on all ester bond units in order to obtain a copolymerized polyester film having excellent stretchability, mechanical strength and flatness.

As the copolymer component in the present invention, there may be mentioned polyalkylene glycol. The polyalkylene glycol may include polyethylene glycol, polypropylene glycol and polytetramethylene glycol. The number average molecular weight is not particularly limited, but preferably 200 to 20,000, more preferably 600 to 20,000, particularly preferably 1,000 to 5,000.

The amount of the polyalkylene glycol is desirably 3 % by weight or more based on the total weight of the copolymerized polyester in order to obtain mechanical strength necessary for a film to straighten roll set curl after development processing and not to lower stretchability, and does not exceed 10 % by weight in order to obtain a film having sufficient mechanical strength.

Other components may be copolymerized and/or other polyesters may be blended within the range which does not impair the effects of the present invention.

As the other component to be copolymerized, there may be mentioned, for example, a diol component such as diethylene glycol, neopentyl glycol, propylene glycol, p-xylylene glycol and 1,4-cyclohexanedimethanol; a dicarboxylic acid component such as adipic acid, sebacic acid, dodecanedicarboxylic acid, isophthalic acid and 2,6-naphthalenedicarboxylic acid; and a polyfunctional dicarboxylic acid component such as trimellitic acid.

As the polyester which may be blended, there may be mentioned polyethylene terephthalate, polybutylene terephthalate and polyethylene naphthalate.

In a polymer to be used, phosphoric acid, phosphorous acid and esters thereof, and inorganic particles (e.g. silica, kaolin, calcium carbonate, calcium phosphate and titanium dioxide) may be contained during polymerization, or inorganic particles may be blended in the polymer after polymerization. Further, a dye, a pigment and a UV absorber may be added suitably at any stage of after interesterification reaction, during polymerization and after polymerization.

Synthesis of the copolymerized polyester to be used in the present invention is not particularly limited, and the synthesis can be carried out according to a conventional known method. That is, a dicarboxylic acid component and a glycol component are subjected to interesterification, followed by polycondensation at high temperature under reduced pressure to obtain a copolymerized polyester. During the synthesis, a copolymer component, for example, an aromatic dicarboxylic acid having a metal sulfonate group and polyethylene glycol may be added during interesterification or may be added during polycondensation after interesterification reaction.

The antioxidant to be used in the present invention is not particularly limited, and may include, for example, a hindered phenol series compound, an arylamine series compound, a phosphorus series compound and a sulfur type antioxidant, particularly preferably a hindered phenol series compound. The antioxidant may be added at any stage of during polymerization and after polymerization.

The antioxidant is preferably added in an amount of 0.01 to 2 % by weight, more preferably 0.05 to 1.0 % by weight based on the copolymerized polyester. If the amount added is less than 0.01 % by weight, effect on photographic characteristics is lowered, while if it exceeds 2.0 % by weight, turbidity of a copolymerized polyester film is increased, whereby the film is not preferred as a film for transmission photographs. The antioxidants described above may be used singly or in combination.

The effect of the antioxidant in the present invention is particularly significant in a light-sensitive silver halide color photographic material. The reason has not been clarified, but the effect is considered to be related to a coupler in the light-sensitive silver halide photographic material.

In the following, examples of the antioxidant are shown.

Hindered phenol type antioxidants

1.

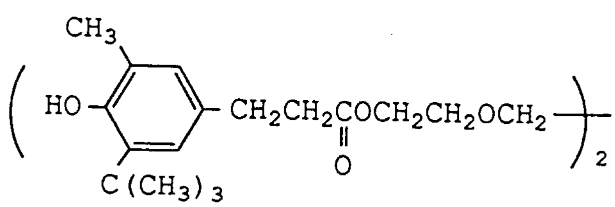

2.

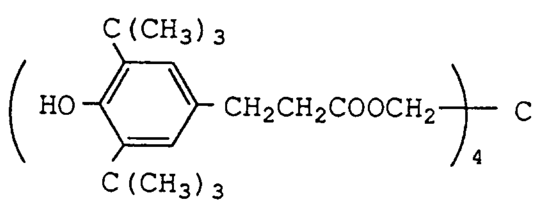

3.

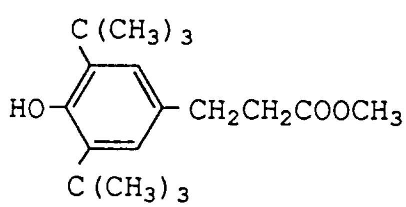

4.

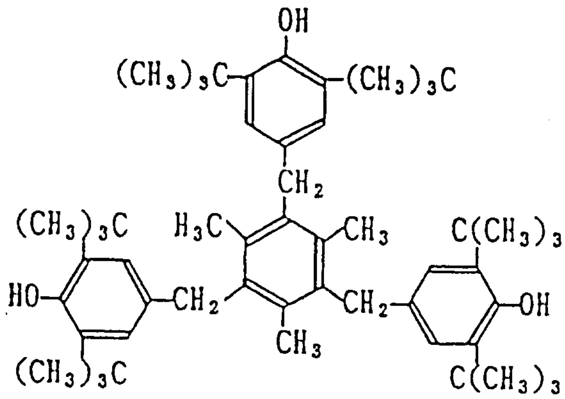

5.

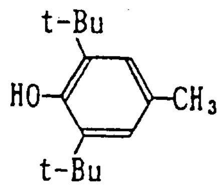

6.

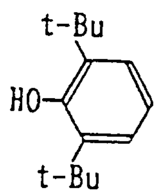

7.

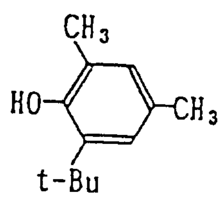

8.

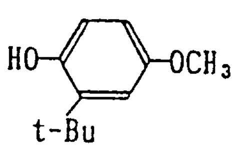

9.

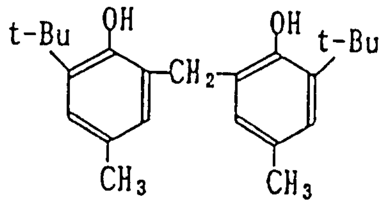

10.

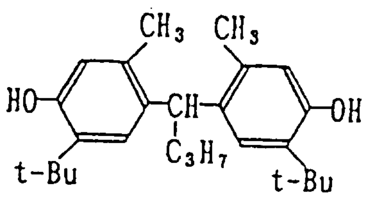

11.

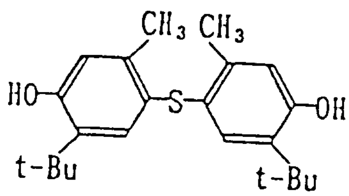

12.

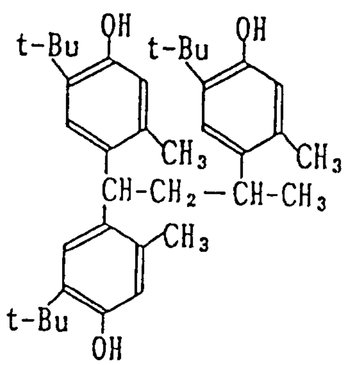

13.

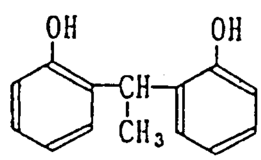

14.

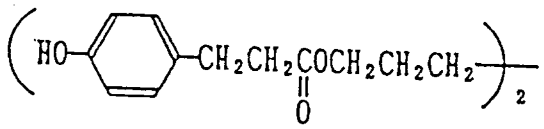

15.

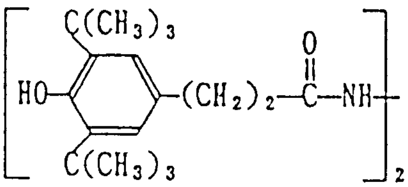

16.

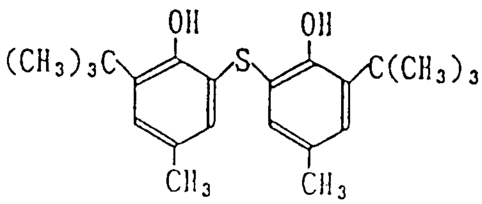

17.

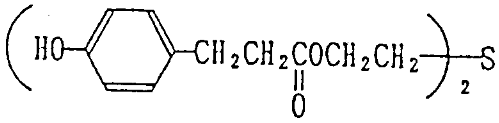

18.

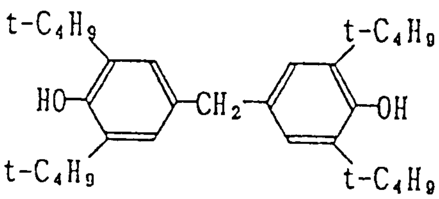

19.

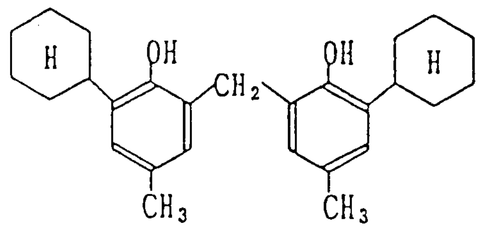

20.

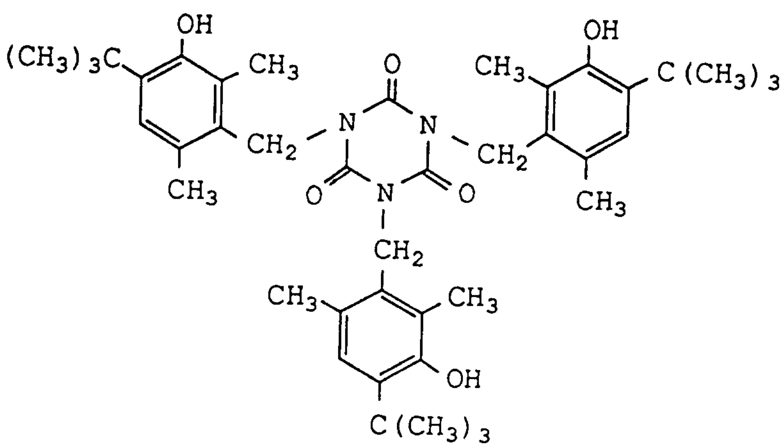

21.

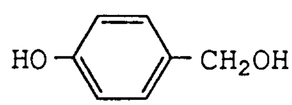

22.

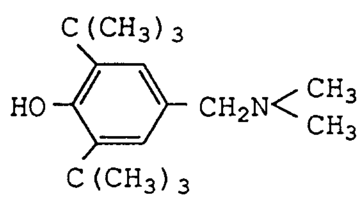

23.

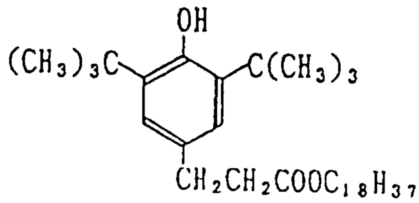

24.

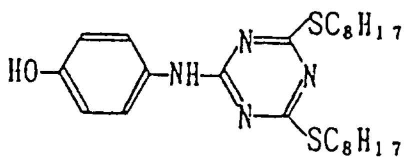

25.

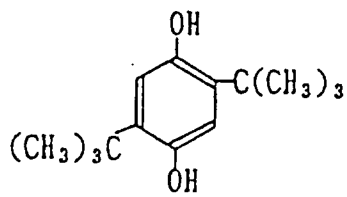

26.

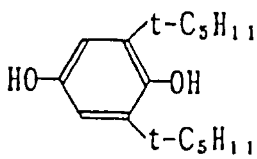

27.

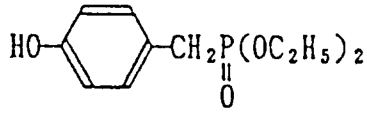

28.

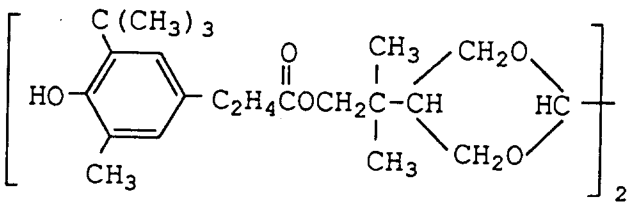

Arylamine type antioxidants

29.

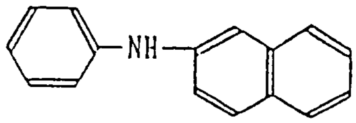

30.

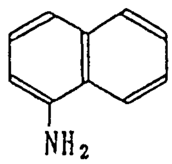

31.

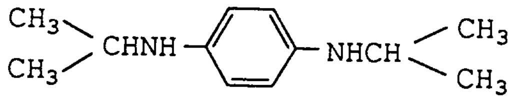

32.

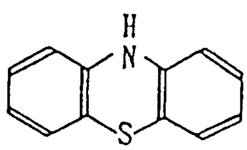

33.

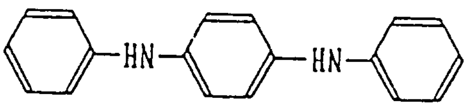

Phosphorus type antioxidants

34.

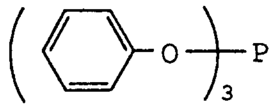

35. $(C_{13}H_{27}O)_3P$

36. $(C_{10}H_{21}O)_3P$

37. $[CH_3(CH_2)_{11}S]_3P$

38.

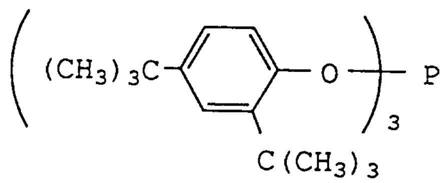

39.

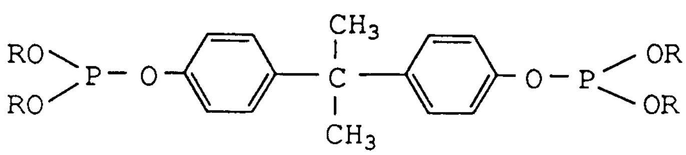

(R: $C_{12}$~$C_{16}$ alkyl)

40.

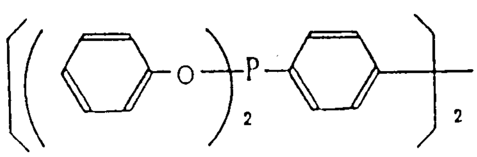

41.

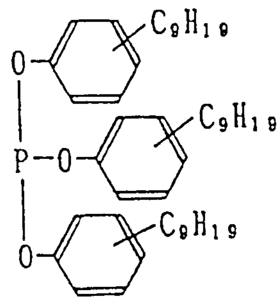

42.

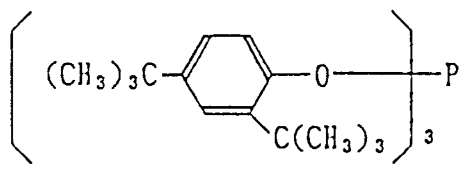

43.

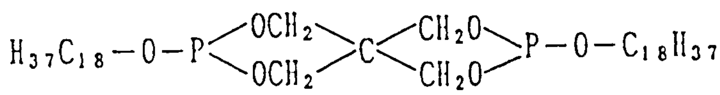

44.

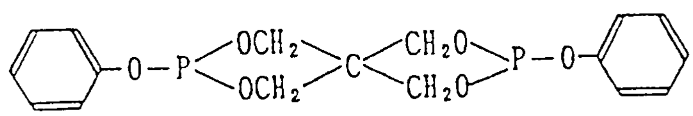

45.

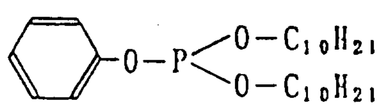

46.

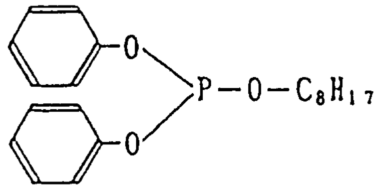

47.

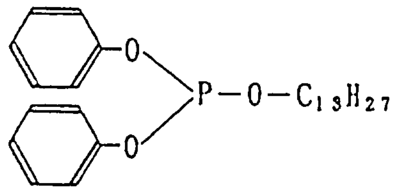

Sulfur type antioxidants

48. $S(CH_2CH_2COOC_{12}H_{25})_2$
49. $S(CH_2CH_2COOC_{18}H_{37})_2$
50.

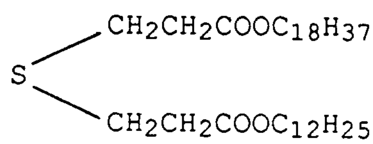

51. $S(CH_2CH_2COOC_{14}H_{29})_2$
52.

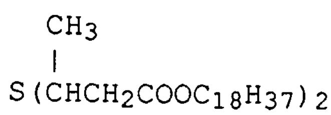

53.

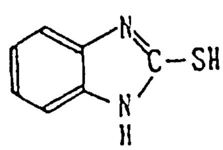

54. $S(CH_2CH_2COOC_{13}H_{27})_2$
55. $(H_{25}C_{12}SCH_2CH_2COOCH_2)_4C$

Among the above antioxidants, preferred are No. 1, No. 2, No. 3, No. 31, No. 34 and No. 48.

In the following, a method for preparing the film of the present invention is described.

A method for obtaining an unstretched sheet may be a conventionally known method, and there may be mentioned, for example, a method in which a copolymerized polyester is sufficiently dried and then melt extruded through an extruder, a filter or a mouthpiece which is controlled at a temperature range of 270 to 320 °C to be made into a sheet, and the sheet is cast on a rotary cooling drum to quench and set the sheet.

Next, as a method of biaxial stretching, conventionally known PET film preparation processes (A) to (D) shown below may be employed.

(A) A method in which an unstretched sheet is first stretched in the longitudinal direction and then stretched in the lateral direction.

(B) A method in which an unstretched sheet is first stretched in the lateral direction and then stretched in the longitudinal direction.

(C) A method in which an unstretched sheet is stretched in the longitudinal direction by a single step or multiple steps, stretched again in the longitudinal direction and then stretched in the lateral direction.

(D) A method in which an unstretched sheet is first stretched in the longitudinal direction, then stretched in the lateral direction and stretched again in the longitudinal direction.

Stretching conditions vary slightly depending on the composition of the copolymerized polyester to be used, but may be a stretching ratio of 2.5 to 6.0-fold in the longitudinal direction at a temperature range of glass transition temperature (Tg) to Tg + 100 °C and a stretching ratio of 2.5 to 4.0-fold in the lateral direction at a temperature range of Tg + 5 °C to Tg + 50 °C. The biaxially stretched film obtained as described above is thermally fixed generally at 150 to 240 °C and cooled. At that time, the film may be relaxed in the longitudinal direction and/or the lateral direction, if necessary.

The support film for a photographic material of the present invention may be laminated with other substances by a coextrusion method or a lamination method, or may be laminated by a coating method before stretching, during stretching or after stretching within the range which does not impair the effects of the present invention.

The film thus obtained can be applied to various known uses, and it is particularly useful as a support for a photographic material of a roll film.

The light-sensitive silver halide photographic material of the present invention comprises the support for a photographic material of the present invention and at least one silver halide emulsion layer on at least one side of the support.

The silver halide emulsion layer herein mentioned may be provided by coating directly on the support, or may be provided by coating through another layer, for example, a hydrophilic colloid layer containing no silver halide emulsion.

During this process, in order to increase adhesiveness, various surface treatments such as corona discharge treatment and chemical treatment may be applied, if necessary. In order to further increase adhesiveness, a subbing layer may be provided by coating.

As silver halide to be used in the present invention, silver halide having any composition may be used. For example, silver chloride, silver chlorobromide, silver chloroiodobromide, pure silver bromide and silver iodobromide may be included.

To the silver halide emulsion to be used in the present invention, a sensitizing dye, a plasticizer, an antistatic agent, a surfactant and a hardener may be also added.

When the light-sensitive silver halide photographic material of the present invention is subjected to development processing, developers as described in, for example, T.H. James "The Theory of the Photographic Process, Fourth Edition", pp. 291 to 334 and "Journal of the American Chemical Society", Vol. 73, pp. 3 and 100 (1951) can be used.

## EXAMPLES

The present invention is described in detail by referring to Examples.

### Basic support 1 (Comparison)

Polyethylene terephthalate film (thickness: 75 µm)

Longitudinal stretching conditions:
temperature of 90 °C, stretching ratio of 3-fold

Lateral stretching conditions:
temperature of 90 °C, stretching ratio of 3-fold

Thermal fixing temperature: 220 °C

### Basic support 2 (Present invention)

Film comprising a copolymer of dimethyl terephthalate: 5-sodium dimethyl sulfoisophthalate:dimethyl adipate:ethylene glycol = 85:5:10:100 (molar ratio) (thickness: 75 µm)

Longitudinal stretching conditions:
temperature of 75 °C, stretching ratio of 3-fold

Lateral stretching conditions:
temperature of 75 °C, stretching ratio of 3-fold

Thermal fixing temperature: 200 °C

Basic support 3 (Present invention)

Film comprising a copolymer of dimethyl terephthalate: 5-sodium dimethyl sulfoisophthalate:polyethylene glycol (molecular weight: 3,500):ethylene glycol = 95:5:0.5:99.5 (molar ratio) (thickness: 75 µm)

Longitudinal stretching conditions:
temperature of 80 °C, stretching ratio of 3-fold

Lateral stretching conditions:
temperature of 80 °C, stretching ratio of 3-fold

Thermal fixing temperature: 200 °C

By using the 3 kinds of the basic supports described above, supports were prepared by changing antioxidants as shown below.

| Support No. | Basic support | Kind of antioxidant | Amount of antioxidant (% by weight) |
|---|---|---|---|
| 4 | 1 | 1 | 0.2 |
| 5 | 2 | 1 | 0.2 |
| 6 | 3 | 1 | 0.005 |
| 7 | 3 | 1 | 0.005 |
| 8 | 3 | 1 | 0.2 |
| 9 | 3 | 1 | 1.4 |
| 10 | 3 | 1 | 2.3 |
| 11 | 3 | 2 | 0.2 |
| 12 | 3 | 3 | 0.2 |
| 13 | 3 | 31 | 0.05 |
| 14 | 3 | 34 | 0.05 |

Compounds used are put together and shown below.

The both film surfaces of Basic support 1 described above were subjected to corona discharge treatment of 8 W/($m^2$•min). On one of the surfaces, Coating solution B-1 shown below was provided by coating as Subbing layer B-1 so as to have a dried film thickness of 0.8 µm, and on the other side of the support opposite to Subbing layer B-1, Coating solution B-2 shown below was provided by coating as Subbing layer B-2 so as to have a dried film thickness of 0.8 µm.

| Coating solution B-1 | |
|---|---|
| Copolymer latex solution (solid component: 30 %) comprising 30 % by weight of butyl acrylate, 20 % by weight of t-butyl acrylate, 25 % by weight of styrene and 25 % by weight of 2-hydroxyethyl acrylate | 270 g |
| Compound (C-6) | 0.6 g |
| Hexamethylene-1,6-bis(ethylene urea) | 0.8 g |
| made up to 1 liter with water. | |

| Coating solution B-2 | |
|---|---|
| Copolymer latex solution (solid component: 30 %) comprising 40 % by weight of butyl acrylate, 20 % by weight of styrene and 40 % by weight of glycidyl acrylate | 270 g |
| Compound (C-6) | 0.6 g |
| Hexamethylene-1,6-bis(ethylene urea) | 0.8 g |
| made up to 1 liter with water. | |

Further, Subbing layer B-1 and Subbing layer B-2 were Subjected to corona discharge of 8 W/-($m^2$•min). On Subbing layer B-1, Coating solution B-3 shown below was provided by coating as Subbing layer B-3 so as to have a dried film thickness of 0.1 $\mu$m, and on Subbing layer B-2, Coating solution B-4 shown below was provided by coating as Subbing layer B-4 having antistatic function so as to have a dried film thickness of 0.8 $\mu$m.

| Coating Solution B-3 | |
|---|---|
| Gelatin | 10 g |
| Compound (C-6) | 0.2 g |
| Compound (C-7) | 0.2 g |
| Compound (C-8) | 0.1 g |
| Silica particle having an average particle size of 3 $\mu$m | 0.1 g |
| made up to 1 liter with water. | |

| Coating solution B-4 | |
|---|---|
| Water-soluble conductive polymer (C-9) | 60 g |
| Latex solution (solid component: 20 %) containing Compound (C-10) | 80 g |
| Ammonium sulfate | 0.5 g |
| Hardener (C-11) | 12 g |
| Polyethylene glycol (weight average molecular weight: 600) | 6 g |
| made up to 1 liter with water. | |

Subbing layer B-3 was subjected to corona discharge of 25 W/($m^2$•min), and Subbing layer B-4 was subjected to corona discharge of 8 W/($m^2$•min).

Further, on Subbing layer B-3, emulsion layers and other layers shown below were formed successively from a support side, and on Subbing layer B-4, a back coating layer shown below was formed to prepare a multilayer light-sensitive color photographic material 101. Each amount shown below is an amount per 1 $m^2$.

| Back coating layer | |
|---|---|
| Gelatin | 4.0 g |
| Merck saponin (trade name, produced by Merck Co.) | 2.0 mg |
| Silica particle having an average particle size of 3 $\mu$m | 20 mg |
| Colloidal silica | 60 mg |
| Compound (C-8) | 10 mg |
| Compound (H-1) | 15 mg |
| Compound (VS-2) | 20 mg |

Emulsion layers and other layers

| First layer: Antihalation layer (HC) | |
|---|---|
| Black colloidal silver | 0.15 g |
| UV absorber (UV-1) | 0.20 g |
| Colored cyan coupler (CC-1) | 0.02 g |
| High boiling point solvent (Oil-1) | 0.20 g |
| High boiling point solvent (Oil-2) | 0.20 g |
| Gelatin | 1.6 g |

| Second layer: Intermediate layer (IL-1) | |
|---|---|
| Gelatin | 1.3 g |

| Third layer: Low sensitivity red-sensitive emulsion layer (R-L) | |
|---|---|
| Silver iodobromide emulsion (average grain size: 0.3 µm, average iodine content: 2.0 mole %) | 0.4 g |
| Silver iodobromide emulsion (average grain size: 0.4 µm, average iodine content: 8.0 mole %) | 0.3 g |
| Sensitizing dye (S-1) | $3.2 \times 10^{-4}$ (mole/mole of silver) |
| Sensitizing dye (S-2) | $3.2 \times 10^{-4}$ (mole/mole of silver) |
| Sensitizing dye (S-3) | $0.2 \times 10^{-4}$ (mole/mole of silver) |
| Cyan coupler (C-1) | 0.50 g |
| Cyan coupler (C-2) | 0.13 g |
| Colored cyan coupler (CC-1) | 0.07 g |
| DIR compound (D-1) | 0.006 g |
| DIR compound (D-2) | 0.001 g |
| High boiling point solvent (Oil-1) | 0.55 g |
| Gelatin | 1.0 g |

| Fourth layer: High sensitivity red-sensitive emulsion layer (R-H) | |
|---|---|
| Silver iodobromide emulsion (average grain size: 0.7 µm, average iodine content: 7.5 mole %) | 0.9 g |
| Sensitizing dye (S-1) | $1.7 \times 10^{-4}$ (mole/mole of silver) |
| Sensitizing dye (S-2) | $1.6 \times 10^{-4}$ (mole/mole of silver) |
| Sensitizing dye (S-3) | $0.1 \times 10^{-4}$ (mole/mole of silver) |
| Cyan coupler (C-2) | 0.23 g |
| Colored cyan coupler (CC-1) | 0.03 g |
| DIR compound (D-2) | 0.02 g |
| High boiling point solvent (Oil-1) | 0.25 g |
| Gelatin | 1.0 g |

| Fifth layer: Intermediate layer (IL-2) | |
|---|---|
| Gelatin | 0.8 g |

| Sixth layer: Low sensitivity green-sensitive emulsion layer (G-L) | |
|---|---|
| Silver iodobromide emulsion (average grain size: 0.4 µm, average iodine content: 8.0 mole %) | 0.6 g |
| Silver iodobromide emulsion (average grain size: 0.3 µm, average iodine content: 2.0 mole %) | 0.2 g |
| Sensitizing dye (S-4) | $6.7 \times 10^{-4}$ (mole/mole of silver) |
| Sensitizing dye (S-5) | $0.8 \times 10^{-4}$ (mole/mole of silver) |
| Magenta coupler (M-1) | 0.17 g |
| Magenta coupler (M-2) | 0.43 g |
| Colored magenta coupler (CM-1) | 0.10 g |
| DIR compound (D-3) | 0.02 g |
| High boiling point solvent (Oil-2) | 0.7 g |
| Gelatin | 1.0 g |

| Seventh layer: High sensitivity green-sensitive emulsion layer (G-H) | |
|---|---|
| Silver iodobromide emulsion (average grain size: 0.7 µm, average iodine content: 7.5 mole %) | 0.9 g |
| Sensitizing dye (S-6) | $1.1 \times 10^{-4}$ (mole/mole of silver) |
| Sensitizing dye (S-7) | $2.0 \times 10^{-4}$ (mole/mole of silver) |
| Sensitizing dye (S-8) | $0.3 \times 10^{-4}$ (mole/mole of silver) |
| Magenta coupler (M-1) | 0.30 g |
| Magenta coupler (M-2) | 0.13 g |
| Colored magenta coupler (CM-1) | 0.04 g |
| DIR compound (D-3) | 0.004 g |
| High boiling point solvent (Oil-2) | 0.35 g |
| Gelatin | 1.0 g |

| Eighth layer: Yellow filter layer (YC) | |
|---|---|
| Yellow colloidal silver | 0.1 g |
| Additive (HS-1) | 0.07 g |
| Additive (HS-2) | 0.07 g |
| Additive (SC-1) | 0.12 g |
| High boiling point solvent (Oil-2) | 0.15 g |
| Gelatin | 1.0 g |

| Ninth layer: Low sensitivity blue-sensitive emulsion layer (B-L) | |
|---|---|
| Silver iodobromide emulsion (average grain size: 0.3 µm, average iodine content: 2.0 mole %) | 0.25 g |
| Silver iodobromide emulsion (average grain size: 0.4 µm, average iodine content: 8.0 mole %) | 0.25 g |
| Sensitizing dye (S-9) | $5.8 \times 10^{-4}$ (mole/mole of silver) |
| Yellow coupler (Y-1) | 0.60 g |
| Yellow coupler (Y-2) | 0.32 g |
| DIR compound (D-1) | 0.003 g |
| DIR compound (D-2) | 0.006 g |
| High boiling point solvent (Oil-2) | 0.18 g |
| Gelatin | 1.3 g |

| Tenth layer: High sensitivity blue-sensitive emulsion layer (B-H) | |
|---|---|
| Silver iodobromide emulsion (average grain size: 0.8 µm, average iodine content: 8.5 mole %) | 0.5 g |
| Sensitizing dye (S-10) | $3.0 \times 10^{-4}$ (mole/mole of silver) |
| Sensitizing dye (S-11) | $1.2 \times 10^{-4}$ (mole/mole of silver) |
| Yellow coupler (Y-1) | 0.18 g |
| Yellow coupler (Y-2) | 0.10 g |
| High boiling point solvent (Oil-2) | 0.05 g |
| Gelatin | 1.0 g |

| Eleventh layer: First protective layer (PRO-1) | |
|---|---|
| Silver iodobromide (average grain size: 0.08 µm) | 0.3 g |
| UV absorber (UV-1) | 0.07 g |
| UV absorber (UV-2) | 0.10 g |
| Additive (HS-1) | 0.2 g |
| Additive (HS-2) | 0.1 g |
| High boiling point solvent (Oil-1) | 0.07 g |
| High boiling point solvent (Oil-3) | 0.07 g |
| Gelatin | 0.8 g |

| Twelfth layer: Second protective layer (PRO-2) | |
|---|---|
| Compound A | 0.04 g |
| Compound B | 0.004 g |
| Polymethyl methacrylate (average grain size: 3 µm) | 0.02 g |
| Copolymer of methyl methacrylate:ethyl methacrylate:methacrylic acid = 3:3:4 (weight ratio)(average grain size: 3 µm) | 0.13 g |

The silver iodobromide emulsion used in the tenth layer was prepared by the following method.

By using a monodispersed silver iodobromide grain having an average grain size of 0.33 µm (silver iodide content: 2 mole %) as a seed crystal, the silver iodobromide emulsion was prepared according to a double jet method.

While Solution (G-1) shown below was maintained at a temperature of 70 °C, pAg 7.8 and pH 7.0 and stirred well, a seed emulsion in an amount corresponding to 0.34 mole was added thereto.

(Formation of inner portion-high iodine content phase "core phase")

Thereafter, (H-1) and (S-1) shown below were added while maintaining a flow ratio of 1:1 over 86 minutes at an accelerated flow rate (flow rate at completion of addition was 3.6-fold of initial flow rate).

(Formation of outer portion-low iodine content phase "shell phase")

Subsequently, (H-2) and (S-2) shown below were added while maintaining pAg 10.1 and pH 6.0 over 65 minutes at a flow ratio of 1:1 and an accelerated flow rate (flow rate at completion of addition was 5.2-fold of initial flow rate).

During formation of grains, pAg and pH were controlled by using a potassium bromide aqueous solution and a 56 % acetic acid aqueous solution. After formation of grains, the grains were washed according to a conventional flocculation method and then dispersed again by adding gelatin, and pH and pAg were controlled to 5.8 and 8.06, respectively, at 40 °C.

The resulting emulsion was a monodispersed emulsion containing octahedral silver iodobromide grains having an average grain size of 0.80 µm, a distribution width of 12.4 % and a silver iodide content of 8.5 mole %.

| (G-1) | |
|---|---|
| Ossein gelatin<br>Compound-1<br>28 % Aqueous ammonia<br>56 % Acetic acid aqueous solution | 100.0 g<br>25.0 ml<br>440.0 ml<br>660.0 ml |
| made up to 5,000.0 ml with water. | |

| (H-1) | |
|---|---|
| Ossein gelatin<br>Potassium bromide<br>Potassium iodide | 82.4 g<br>151.6 g<br>90.6 g |
| made up to 1,030.5 ml with water. | |

| (S-1) | |
|---|---|
| Silver nitrate<br>28 % Aqueous ammonia | 309.2 g<br>Equivalent amount |
| made up to 1,030.5 ml with water. | |

| (H-2) | |
|---|---|
| Ossein gelatin<br>Potassium bromide<br>Potassium iodide | 302.1 g<br>770.0 g<br>33.2 g |
| made up to 3,776.8 ml with water. | |

| (S-2) | |
|---|---|
| Silver nitrate<br>28 % Aqueous ammonia | 1,133.0 g<br>Equivalent amount |
| made up to 3,776.8 ml with water. | |

In the same manner except for changing an average grain size of a seed grain, temperature, pAg, pH, flow amount, addition time and halide composition, the above respective emulsions having different average grain sizes and silver iodide contents were prepared.

All emulsions were core/shell type monodispersed emulsions having a distribution width of 20 % or less. The respective emulsions were subjected to optimum chemical ripening in the presence of sodium thiosulfate, chloroauric acid and ammonium thiocyanate, and a sensitizing dye, 4-hydroxy-6-methyl-1,3,3a,7-tetrazaindene and 1-phenyl-5-mercaptotetrazole were added.

Further, in the above light-sensitive material 101, Compounds Su-1 and Su-2, a viscosity controller, Hardeners H-1 and H-2, Stabilizer ST-1, Antifoggants AF-1 and AF-2 (having weight average molecular weights of 10,000 and 1,100,000), Dyes AI-1 and AI-2 and Compound DI-1 (9.4 mg/$m^2$) were further contained. Structures of the respective compounds used for forming the photographic constituent layers are shown below.

(C-6)

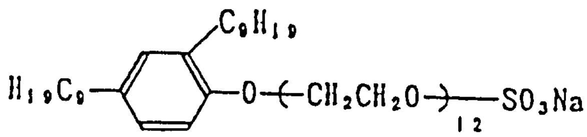

(C-7)

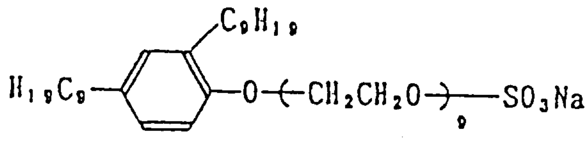

(C-8)

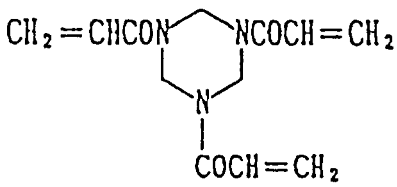

(C-9)

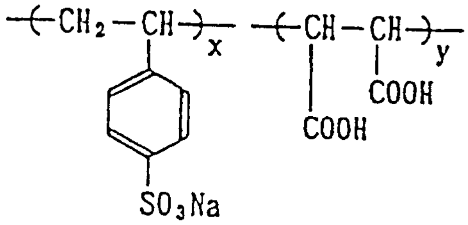

$\overline{Mn}$ = 5000

( $\overline{Mn}$ means a number average molecular weight)

x:y = 75:25 (weight ratio)

(C-10)

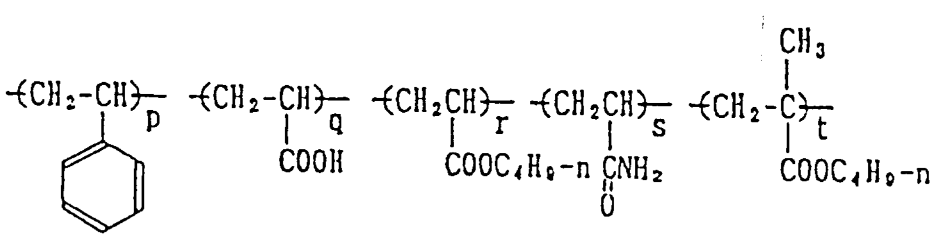

p:q:r:s:t = 40:5:10:5:40 (weight ratio)

(C-11)

Mixture of

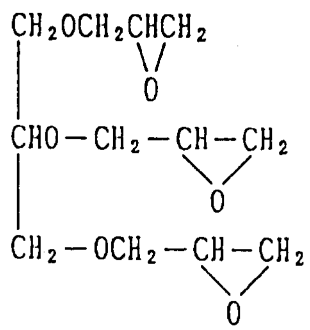

,

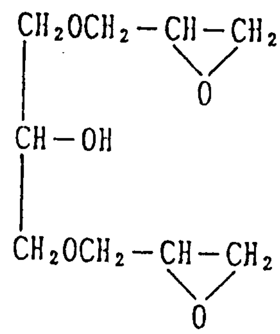

and

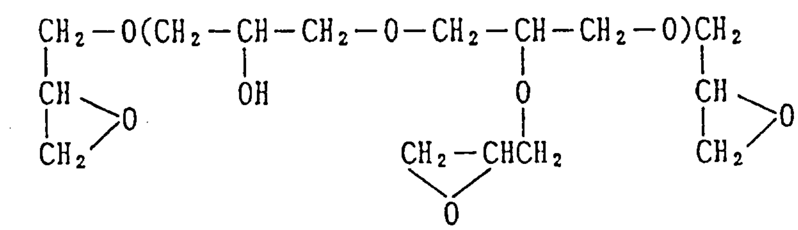

C-1

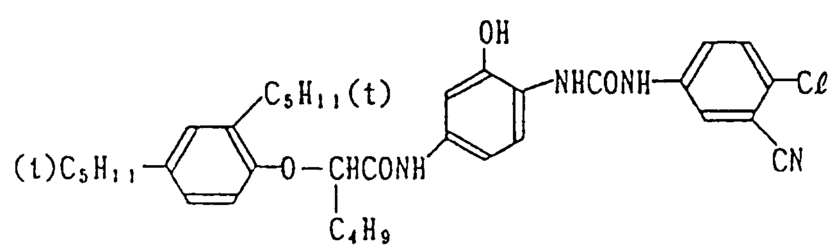

C-2

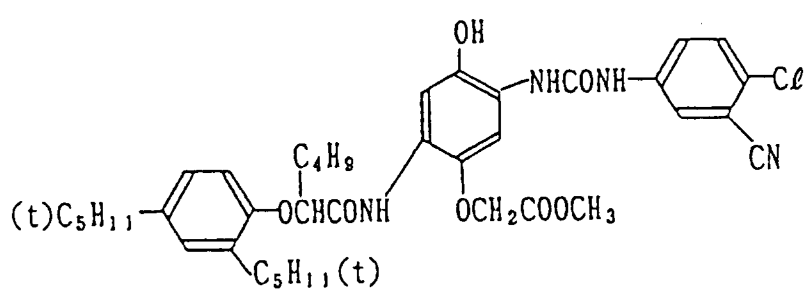

M-1

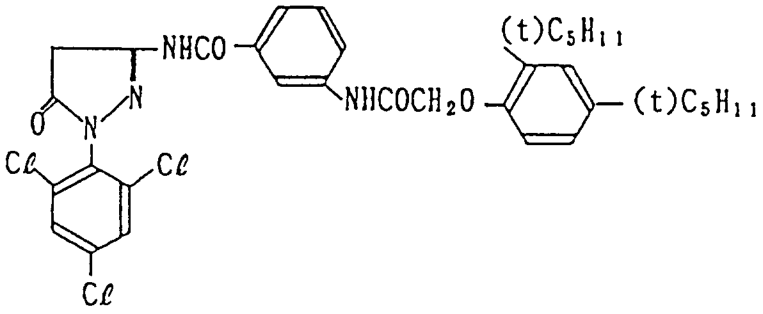

M-2

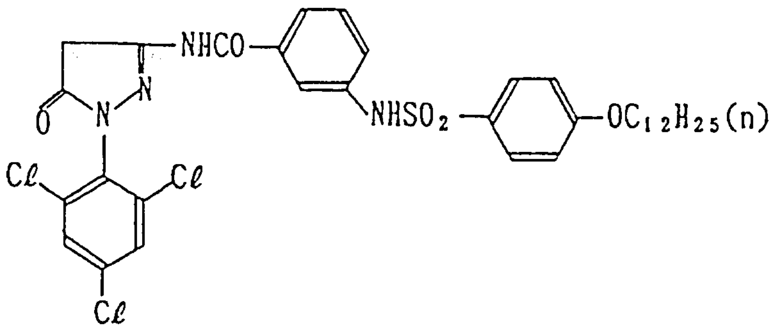

Y-1

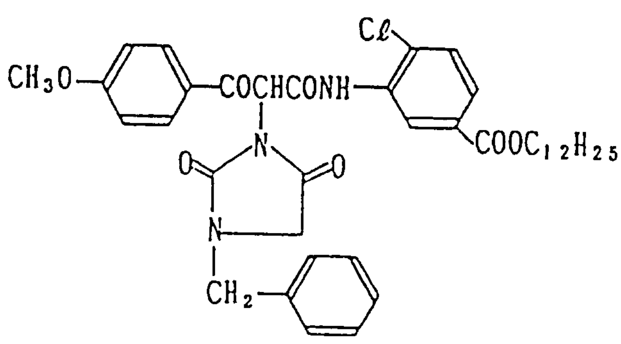

Y-2

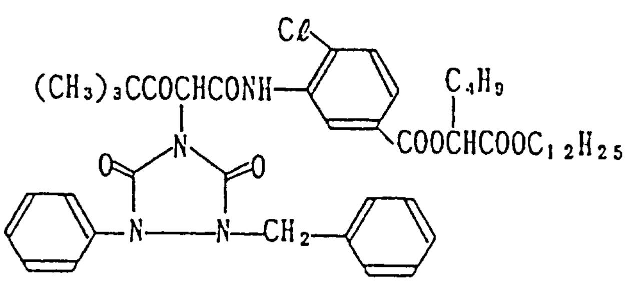

CC-1

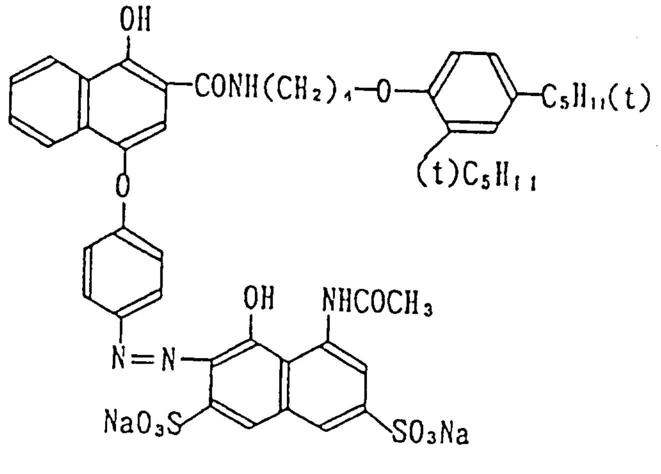

CM-1

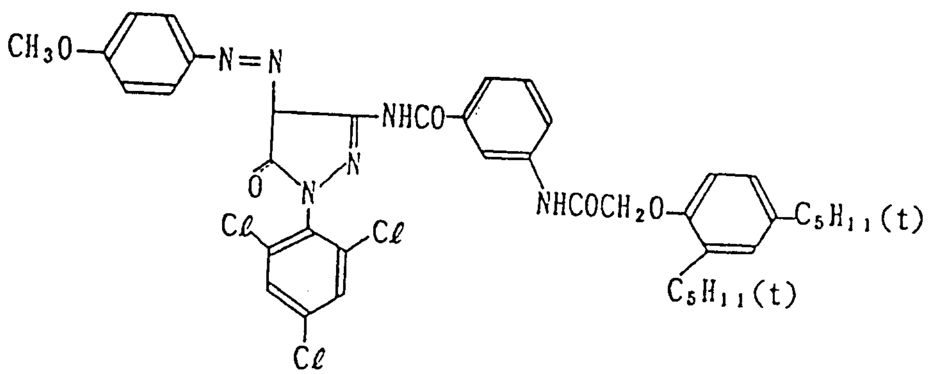

D-1

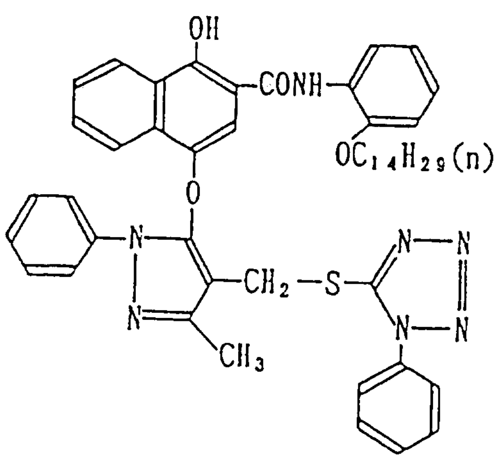

D-2

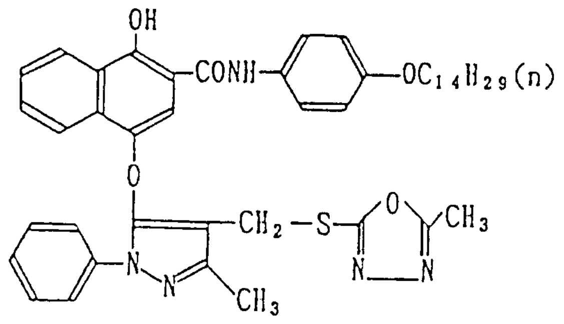

D-3

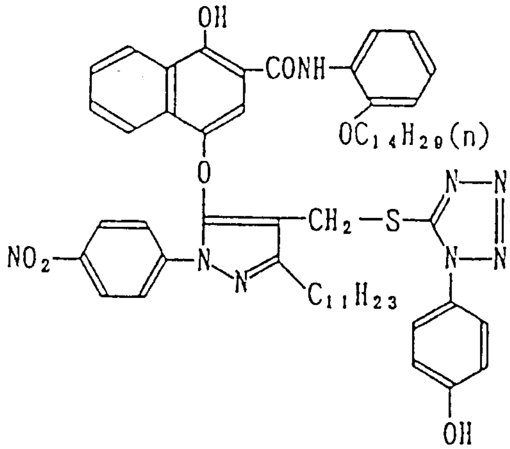

UV-1

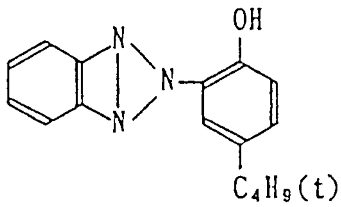

UV-2

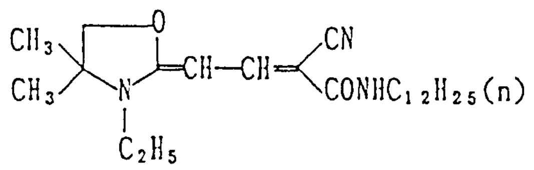

(S-1)

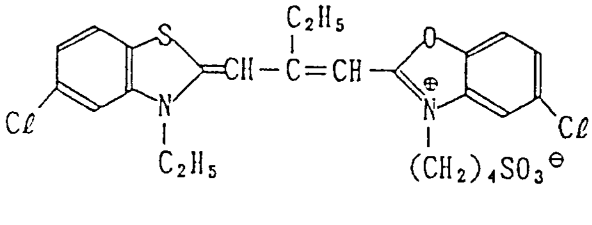

(S-2)

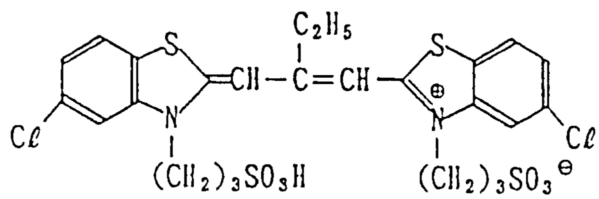

(S-3)

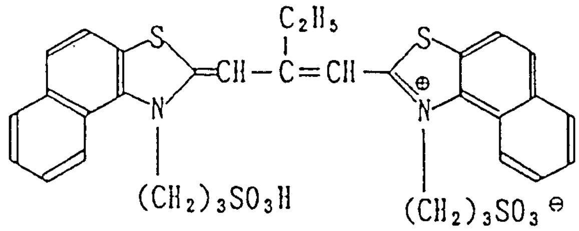

(S-4)

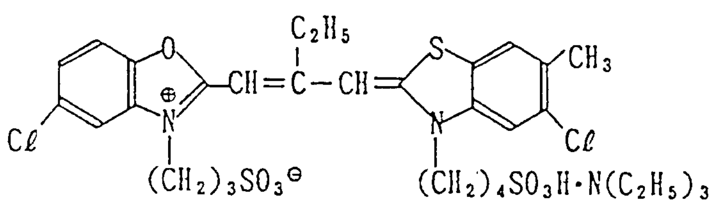

(S-5)

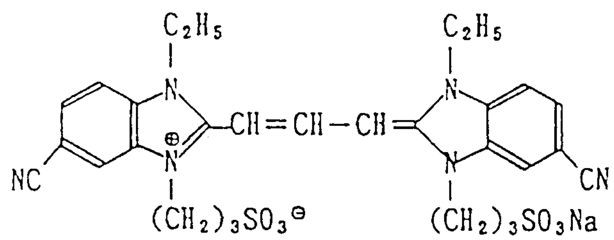

(S-6)

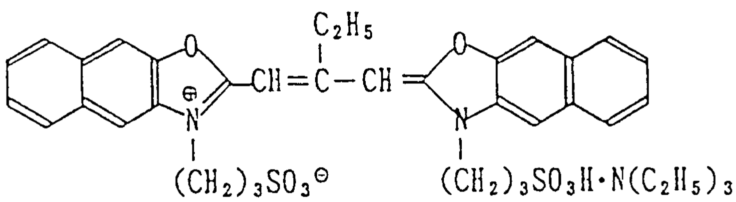

(S-7)

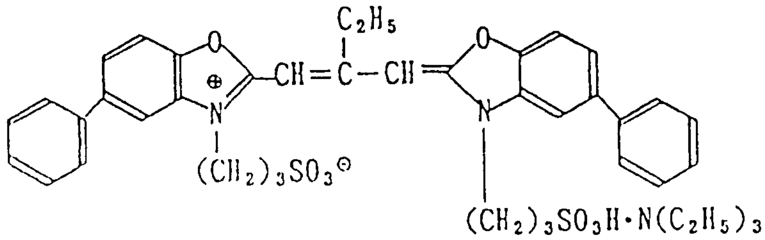

(S-8)

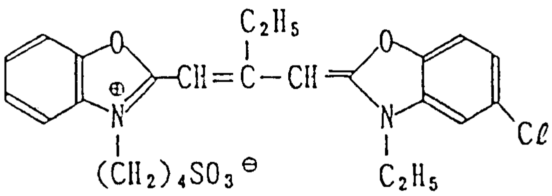

(S-9)

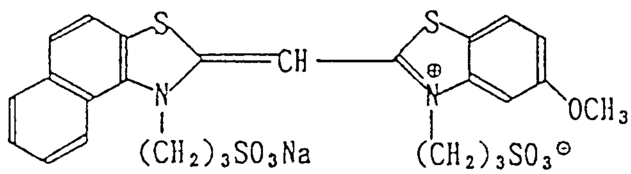

(S-10)

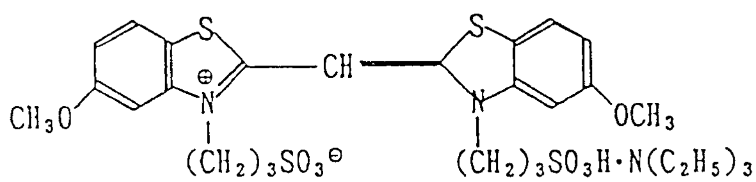

(S-11)

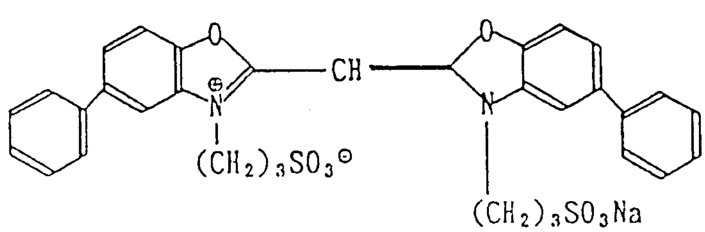

HS-1

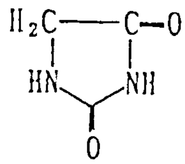

HS-2

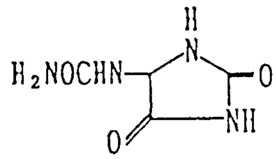

SC-1

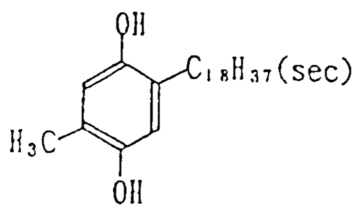

and

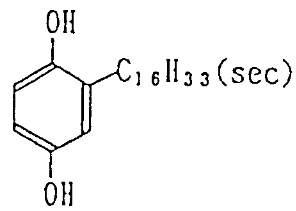

(2:3 (weight ratio) mixture)

Oil-1

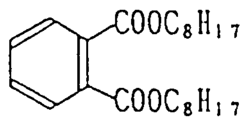

Oil-2

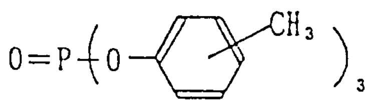

Oil-3

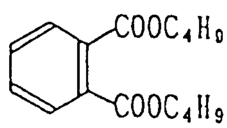

H-1

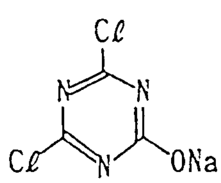

H-2

$(CH_2{=}CHSO_2CH_2{-})_2{-}O$

Su-1

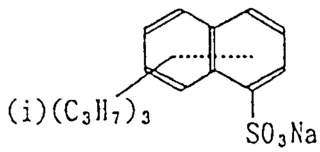

Su-2

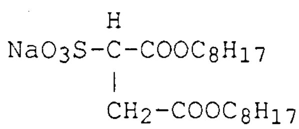

Compound A

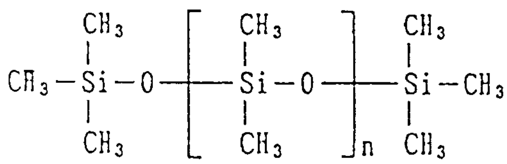

(weight average molecular weight = 30,000)

Compound B

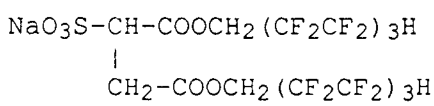

DI-1 (Mixture of 3 components shown below)

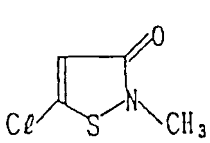 , 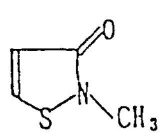 , 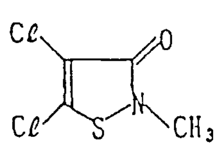

(Component A) (Component B) (Component C)

Component A:Component B:Component C = 50:46:4 (molar ratio)

AI-1

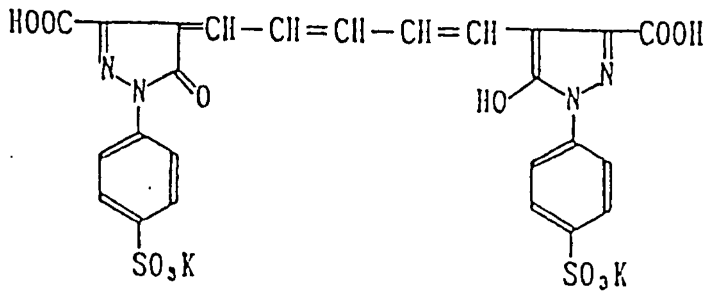

AI-2

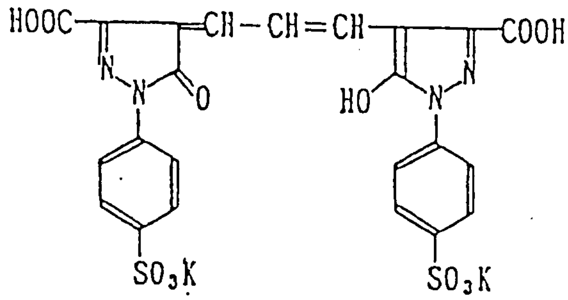

ST-1

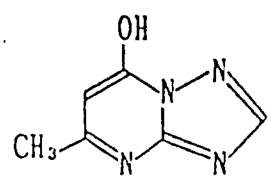

AF-1

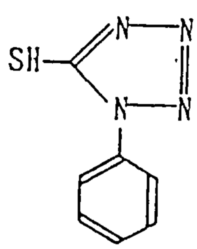

AF-2

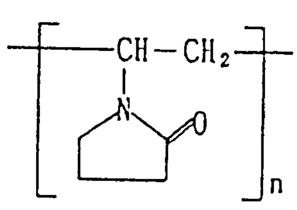

For Samples 101 to 116 prepared as described above, examined were property of recovering from roll set curl, and photographic characteristics, i.e. fog, sensitivity and printing suitability after storage at high temperature when the samples were treated by using the following recipes. The results are shown in Table 1.

⟨Property of recovering from roll set curl⟩

A sample film with a size of 12 cm x 35 cm was wound around a core with a diameter of 10 mm, and the wound film was stored at 55 °C and a relative humidity of 20 % for 3 days to form roll set curl.

Thereafter, the film was released from the core and dipped in pure water of 38 °C for 15 minutes. Then, the film was loaded with 50 g and dried for 3 minutes by means of a hot air dryer at 55 °C. After the load was removed, the film was hung vertically, and a distance between both ends of the film was measured to evaluate a recovering degree based on the original length of 12 cm.

〈Storability at high temperature〉

A sample treated by heat at 55 °C for 5 days and a sample stored at room temperature for 5 days were subjected to white exposure through a stepwedge for sensitometry and developed under the conditions described below.

Measured were increase of fog (ΔFog) of the heat-treated sample compared with fog of the untreated sample and relative sensitivity (S) of the heat-treated sample when sensitivity of the untreated sample was defined as 100.

〈Printing suitability〉

The sample was cut to have a width of 35 mm and perforated. By using the sample, pictures were taken by an ordinary camera, and the sample film was developed and then printed on a color paper to examine printing results.

| Processing steps | | | |
|---|---|---|---|
| Processing step | Processing time | Processing temperature | Replenished amount* |
| Color development | 3 min 15 sec | 38 ± 0.3 °C | 780 ml |
| Bleaching | 45 sec | 38 ± 2.0 °C | 150 ml |
| Fixing | 1 min 30 sec | 38 ± 2.0 °C | 830 ml |
| Stabilizing | 60 sec | 38 ± 5.0 °C | 830 ml |
| Drying | 1 min | 55 ± 5.0 °C | - |

*: the replenished amount is a value per 1 $m^2$ of the light-sensitive material.

The following color developing solution, bleaching solution, fixing solution, stabilizing solution and replenishing solutions thereof were used.

| Color developing solution | |
|---|---|
| Water | 800 ml |
| Potassium carbonate | 30 g |
| Sodium hydrogen carbonate | 2.5 g |
| Potassium sulfite | 3.0 g |
| Sodium bromide | 1.3 g |
| Potassium iodide | 1.3 mg |
| Hydroxylamine sulfate | 2.5 g |
| Sodium chloride | 0.6 g |
| 4-Amino-3-methyl-N-ethyl-N-($\beta$-hydroxylethyl)aniline sulfate | 4.5 g |
| Diethylenetriaminepentaacetic acid | 3.0 g |
| Potassium hydroxide | 1.2 g |
| made up to 1 liter with addition of water, and adjusted to pH 10.06 by using potassium hydroxide or 20 % sulfuric acid. | |

| Color developing replenishing solution | |
|---|---|
| Water | 800 ml |
| Potassium carbonate | 35 g |
| Sodium hydrogen carbonate | 3 g |
| Potassium sulfite | 5 g |
| Sodium bromide | 0.4 g |
| Hydroxylamine sulfate | 3.1 g |
| 4-Amino-3-methyl-N-ethyl-N-(β-hydroxylethyl)aniline sulfate | 6.3 g |
| Potassium hydroxide | 2 g |
| Diethylenetriaminepentaacetic acid | 3.0 g |
| made up to 1 liter with addition of water, and adjusted to pH 10.18 by using potassium hydroxide or 20 % sulfuric acid. | |

| Bleaching solution | |
|---|---|
| Water | 700 ml |
| Iron (III) ammonium 1,3-diaminopropanetetraacetate | 125 g |
| Ethylenediaminetetraacetic acid | 2 g |
| Sodium nitrate | 40 g |
| Ammonium bromide | 150 g |
| Glacial acetic acid | 40 g |
| made up to 1 liter with addition of water, and adjusted to pH 4.4 by using aqueous ammonia or glacial acetic acid. | |

| Bleaching replenishing solution | |
|---|---|
| Water | 700 ml |
| Iron (III) ammonium 1,3-diaminopropanetetraacetate | 175 g |
| Ethylenediaminetetraacetic acid | 2 g |
| Sodium nitrate | 50 g |
| Ammonium bromide | 200 g |
| Glacial acetic acid | 56 g |
| adjusted to pH 4.0 by using aqueous ammonia or glacial acetic acid, and then made up to 1 liter with addition of water. | |

| Fixing solution | |
|---|---|
| Water | 800 ml |
| Ammonium thiocyanate | 120 g |
| Ammonium thiosulfate | 150 g |
| Sodium sulfite | 15 g |
| Ethylenediaminetetraacetic acid | 2 g |
| adjusted to pH 6.2 by using aqueous ammonia or glacial acetic acid, and then made up to 1 liter with addition of water. | |

| Fixing replenishing solution | |
|---|---|
| Water | 800 ml |
| Ammonium thiocyanate | 150 g |
| Ammonium thiosulfate | 180 g |
| Sodium sulfite | 20 g |
| Ethylenediaminetetraacetic acid | 2 g |
| adjusted to pH 6.5 by using aqueous ammonia or glacial acetic acid, and then made up to 1 liter with addition of water. | |

<u>Stabilizing solution and stabilizing replenishing solution</u>

| | |
|---|---|
| Water | 900 ml |
| 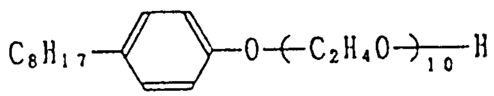 | 2.0 g |
| Dimethylol urea | 0.5 g |
| Hexamethylenetetramine | 0.2 g |
| 1,2-Benzisothiazolin-3-one | 0.1 g |
| Siloxane L-77 (trade name, produced by UCC) | 0.1 g |
| Aqueous ammonia | 0.5 ml |

made up to 1 liter with addition of water, and then adjusted to pH 8.5 by using aqueous ammonia or 50 % sulfuric acid.

Table 1

| Sample No. | Polyester Kind | Basic support No. | Antioxidant Kind | Antioxidant Amount (wt %) | Recovering rate from roll set curl (%) | ΔFog B | ΔFog G | ΔFog R | Relative sensitivity (S) B | Relative sensitivity (S) G | Relative sensitivity (S) R | Printing suitability | Remarks |
|---|---|---|---|---|---|---|---|---|---|---|---|---|---|
| 101 | PET | 1 | - | - | 20 | 0.02 | 0.06 | 0.13 | 95 | 90 | 95 | No problem | Comparative |
| 102 | PET | 1 | 1 | 0.2 | 20 | 0.02 | 0.06 | 0.10 | 95 | 90 | 95 | No problem | Comparative |
| 103 | Copolymerized polyester | 2 | - | - | 90 | 0.05 | 0.20 | 0.15 | 90 | 80 | 90 | No problem | Comparative |
| 104 | Copolymerized polyester | 2 | 1 | 0.2 | 90 | 0.03 | 0.15 | 0.10 | 90 | 85 | 90 | No problem | Present invention |
| 105 | Copolymerized polyester | 3 | - | - | 95 | 0.08 | 0.30 | 0.20 | 85 | 75 | 90 | No problem | Comparative |
| 106 | Copolymerized polyester | 3 | 1 | 0.005 | 95 | 0.07 | 0.28 | 0.18 | 85 | 75 | 90 | No problem | Comparative |
| 107 | Copolymerized polyester | 3 | 1 | 0.05 | 95 | 0.01 | 0.04 | 0.06 | 95 | 90 | 95 | No problem | Present invention |
| 108 | Copolymerized polyester | 3 | 1 | 0.2 | 95 | 0.01 | 0.03 | 0.04 | 95 | 95 | 95 | No problem | Present invention |
| 109 | Copolymerized polyester | 3 | 1 | 1.4 | 95 | 0.01 | 0.03 | 0.04 | 95 | 95 | 95 | No problem | Present invention |
| 110 | Copolymerized polyester | 3 | 1 | 2.3 | 95 | 0.01 | 0.03 | 0.04 | 95 | 95 | 95 | Lowering of sharpness | Comparative |

Table 1 (cont'd)

| Sample No. | Polyester Kind | Basic support No. | Antioxidant Kind | Antioxidant Amount (wt %) | Recovering rate from roll set curl (%) | ΔFog B | ΔFog G | ΔFog R | Relative sensitivity (S) B | Relative sensitivity (S) G | Relative sensitivity (S) R | Printing suitability | Remarks |
|---|---|---|---|---|---|---|---|---|---|---|---|---|---|
| 111 | Copolymerized polyester | 3 | 2 | 0.2 | 95 | 0.01 | 0.03 | 0.04 | 95 | 95 | 95 | No problem | Present invention |
| 112 | Copolymerized polyester | 3 | 3 | 0.2 | 95 | 0.01 | 0.03 | 0.04 | 95 | 95 | 95 | No problem | Present invention |
| 113 | Copolymerized polyester | 3 | 31 | 0.05 | 95 | 0.02 | 0.06 | 0.09 | 95 | 90 | 90 | No problem | Present invention |
| 114 | Copolymerized polyester | 3 | 34 | 0.05 | 95 | 0.02 | 0.07 | 0.09 | 95 | 90 | 90 | No problem | Present invention |
| 115 | Copolymerized polyester | 3 | 48 | 0.05 | 95 | 0.02 | 0.06 | 0.10 | 95 | 90 | 90 | No problem | Present invention |
| 116 | Copolymerized polyester | 3 | 1 | 0.03 | 90 | 0.01 | 0.02 | 0.03 | 95 | 95 | 95 | No problem | Present invention |

As can be clearly seen from Table 1, the light-sensitive silver halide photographic materials prepared by using a film of a resin in which an antioxidant is added to a copolyester obtained by copolymerizing an aromatic dicarboxylic acid having a metal sulfonate group have high rate of recovering from roll set curl and good photographic characteristics. The effect on photographic characteristics brought about by adding an antioxidant to a resin can be clearly observed when the resin according to the present invention is used,

while said effect cannot be observed when polyethylene terephthalate is used. Further, particularly when a copolyester in which an aromatic dicarboxylic acid having a metal sulfonate group is copolymerized with polyalkylene glycol is used, addition of an antioxidant is extremely effective.

In Samples 104 and 107 to 109 in which a hindered phenol type antioxidant is used, photographic characteristics after storage at high temperature are particularly excellent.

In Sample 106 in which the amount of the antioxidant is too small, photographic characteristics after storage at high temperature are insufficient. In Sample 110 in which the amount of the antioxidant is too large, a haze value (a value which shows turbidity of a film and relates to sharpness in printing suitabilities) of the film becomes high, and when the film is printed on a printing paper, lowering of sharpness of images on the printing paper is observed, whereby Sample 110 has problems in practical use. Further, in Sample 116 in which the antioxidant is a mixture of a hindered phenol series compound and an arylamine series compound, photographic characteristics after storage at high temperature are particularly excellent.

According to to the present invention, there can be provided a support for a photographic material in which property of resolving roll set curl is excellent and no bad influence is exerted on photographic characteristics and a light-sensitive silver halide photographic material using the same.

## Claims

1. A support for a photographic material comprising a copolymerized polyester mainly composed of polyethylene terephthalate, wherein said copolymerized polyester contains at least a copolymer component having a metal sulfonate group in an amount of 2 to 7 mole % based on all ester bond units and an antioxidant in an amount of 0.01 to 2.0 % by weight based on said copolymerized polyester.

2. The support of Claim 1 wherein the copolymer component is an aromatic dicarboxylic acid having a metal sulfonate group.

3. The support of Claim 1 wherein the copolymer component is 5-sodium sulfoisophthalic acid, 2-sodium sulfoisophthalic acid, 4-sodium sulfoterephthalic acid, 4-sodium sulfo-2,6-naphthalenedicarboxylic acid, each ester-forming derivative shown below:

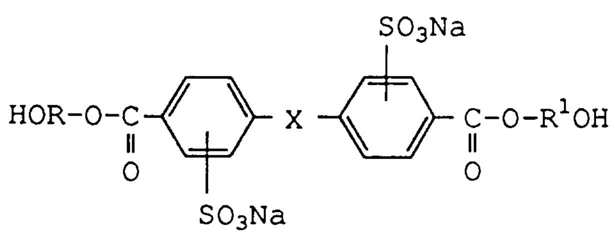

wherein X represents

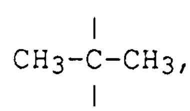

$-CH_2-$, $-SO_2-$ or -O-;

and R and $R^1$ each represent $-(CH_2)_n-$ where n represents an integer of 1 to 20,

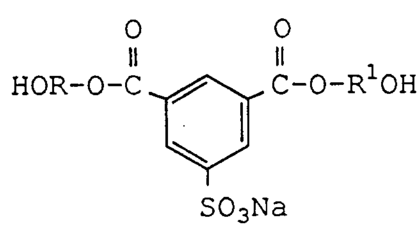

wherein R and $R^1$ each represent $-(CH_2)_n-$ where n represents an integer of 1 to 20, or a compound in which each of these sodiums is substituted by another metal.

4. The support of Claim 1 wherein the copolymerized polyester mainly composed of polyethylene terephthalate contains 3 to 10 % by weight of polyalkylene glycol having a number average molecular weight of 600 to 20,000 based on the total weight of said copolymerized polyester.

5. The support of Claim 4 wherein the polyalkylene glycol is polyethylene glycol, polypropylene glycol or polytetramethylene glycol.

6. The support of Claim 1 wherein the antioxidant is a hindered phenol compound.

7. The support of Claim 1 wherein the antioxidant is a mixture of a hindered phenol compound and an arylamine compound.

8. The support of Claim 1 wherein the antioxidant is one selected from the group consisting of:

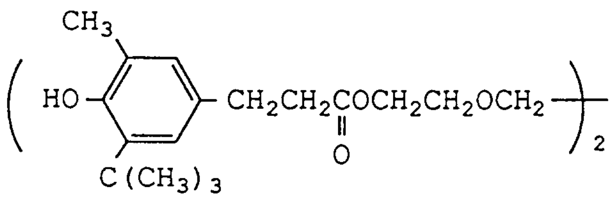

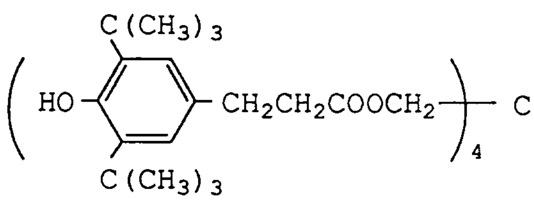

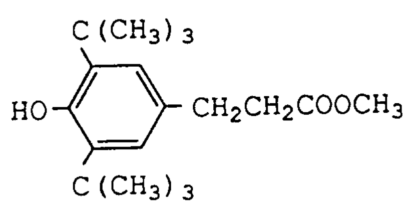

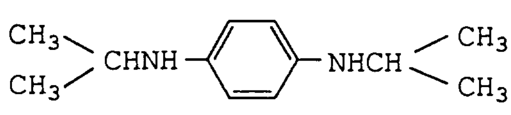

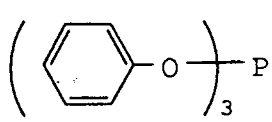

and $S(CH_2CH_2COOC_{12}H_{25})_2$.

**9.** The support of Claim 1 wherein the support is biaxially stretched at a stretching ratio of 2.5 to 6.0-fold in the longitudinal direction at a temperature range of glass transition temperature (Tg) to Tg + 100 °C and a stretching ratio of 2.5 to 4.0-fold in the lateral direction at a temperature range of Tg + 5 °C to Tg + 50 °C and then thermally fixed at 150 to 240 °C

**10.** A light-sensitive silver halide photographic material having a support and at least one silver halide emulsion layer on at least one side of the support, wherein said support is a support as defined in Claim 1.

European Patent Office

# EUROPEAN SEARCH REPORT

Application Number

EP 93 10 4709

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,Y | FR-A-2 388 008 (E.I. DU PONT DE NEMOURS AND COMPANY)<br>* page 3, line 38 - page 4, line 5; claims 1-15; examples 1,2 *<br>--- | 1-6,9,10 | G03C1/795 |
| Y | DE-A-2 805 716 (FUJI PHOTO FILM CO., LTD.)<br>* page 23, line 2 - line 7; claims 1-14; example 1 *<br>--- | 1-6,9,10 | |
| Y | FR-A-2 608 506 (RHONE-POULENC FILMS)<br>* page 1, line 20 - line 23 *<br>* page 10, line 34 - page 11, line 11 *<br>* page 13, line 6 - page 14, line 18; claims 1-11 *<br>--- | 1-6,9,10 | |
| Y | WO-A-8 908 558 (RHONE-POULENC FILMS (FR/FR))<br>* page 1, line 1 - line 17; claims 1-12 *<br>* page 7, line 2 - line 22 *<br>--- | 1-6,9,10 | |
| A | EP-A-0 172 269 (TOYO BOSEKI KABUSHIKI KAISHA)<br>* page 8, line 27 - page 9, line 13; claim 1; example 1 *<br>--- | 1-5,9 | TECHNICAL FIELDS SEARCHED (Int. Cl.5 )<br>G03C |
| A | US-A-5 071 736 (SHINPEI IKENOUE ET AL.)<br>* column 2, line 6 - column 5, line 39; claims 1-9 *<br>--- | 1-5,9,10 | |
| A | PATENT ABSTRACTS OF JAPAN<br>vol. 10, no. 314 (C-380)24 October 1986<br>& JP-A-61 126 131 ( TORAY IND., INC. ) 13 June 1986<br>* abstract *<br>----- | 1-8 | |

The present search report has been drawn up for all claims

| Place of search | Date of completion of the search | Examiner |
|---|---|---|
| THE HAGUE | 29 JUNE 1993 | HINDIAS E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)